# FASCICULE DE BREVET EUROPEEN

(11) **EP 2 438 687 B1**
(45) Date de publication et mention de la délivrance du brevet: **27.04.2016**
(21) Numéro de dépôt: 10724448.5
(22) Date de dépôt: 01.06.2010
(51) Int. Cl.: H04B 3/54

(54) **ADAPTATEUR COURANT PORTEUR INTÉGRÉ**
INTEGRIERTES NETZLEITUNGSÜBERTRAGUNGSADAPTER
INTEGRATED POWER LINE ADAPTER

(30) Priorité: 05.06.2009 FR 0953727
(43) Date de publication de la demande: 11.04.2012
(73) Titulaire: SAGEMCOM BROADBAND SAS, 92500 Rueil Malmaison (FR)
(72) Inventeur: DANGY-CAYE, Nicolas, F-92500 Rueil Malmaison (FR)
(74) Mandataire: Le Guen-Maillet
(86) Numéro de dépôt international: PCT/EP2010/057665
(87) Numéro de publication internationale: WO 2010/139705

(56) Documents cités:
- EP-A1- 2 051 437
- EP-A2- 1 550 584
- JP-A- 9 056 060
- JP-A- 2001 136 668

## Description

La présente invention concerne un adaptateur courant porteur intégré.

L'utilisation d'une technologie courant porteur pour la distribution de flux haut débit sur un réseau électrique domestique est largement reconnue aujourd'hui comme étant une technologie avantageuse du fait, entre autres, qu'elle utilise un réseau de distribution existant chez l'abonné et que la capacité de transmission sur ce type de canal de transmission est élevée.

Pour désigner ce type de technologie, on parle également de ligne courant porteur (CPL) ou PLC (Power Line Communication) ou BPL (Broadband for Power Line). Une ligne courant porteur peut être, par exemple, conforme à la norme HomeplugAV, ou ITU G.hn, ou basée sur la technologie développée par les sociétés UPA/OPERA ou Panasonic.

Le principe d'une technologie courant porteur consiste à superposer au courant électrique de 50 ou 60 Hz un signal à plus haute fréquence et de faible énergie. Ce deuxième signal se propage sur le réseau électrique et peut être reçu et décodé à distance par chaque adaptateur courant porteur branché sur une prise du réseau électrique.

Un adaptateur courant porteur se présente sous la forme d'un boîtier muni de composants électroniques qui, en termes fonctionnels, peuvent se regrouper en un bloc principal qui remplit les fonctions d'un modem courant porteur. Pour cela, il comporte, en outre, un coupleur qui élimine les composantes basses fréquences d'un signal porté par le réseau électrique, et des moyens pour mettre en oeuvre des codes correcteurs d'erreurs afin de contrecarrer les effets néfastes des bruits et des atténuations. I1 comporte également des moyens pour transformer un flux de bits en un signal analogique pour l'émission et inversement pour la réception.

Un adaptateur courant porteur doit être alimenté par la tension du réseau électrique, typiquement de 230V en Europe. Cette tension secteur est requise pour l'alimentation du bloc principal mais est également convertie en plusieurs tensions continues qui sont requises par le bloc principal. Un convertisseur de tension est alors utilisé à cet effet suivi d'un, voire, plusieurs adaptateurs de tensions continues. Par ailleurs, un appareil est généralement relié à l'adaptateur pour recevoir et transmettre des flux numériques sur le réseau électrique via cet adaptateur. Ce type d'appareil requiert d'être alimenté par une tension électrique continue pour fonctionner et est généralement associé, à cet effet, à un convertisseur de tension externe qui se branche sur le réseau électrique.

Il existe des adaptateurs courant porteur, dit intégrés, qui comportent en interne un convertisseur de tension qui délivre à la fois une tension continue à partir de laquelle sont dérivées les tensions continues requises par le bloc principal, et également la tension continue qui est requise pour l'alimentation de l'appareil qui est relié à cet adaptateur. Ainsi, un seul convertisseur de tension est utilisé rendant l'utilisation de ces adaptateurs intéressante d'un point de vue énergétique et logistique.

Les adaptateurs courant porteur intégrés actuels sont confrontés, toutefois, au problème d'hétérogénéité du parc des appareils avec lesquels ils sont susceptibles d'être utilisés. En effet, des appareils tels qu'une passerelle domestique, une Set Top Box ou un dispositif de stockage en réseau (NAS), pour n'en citer que quelques uns, acceptent des puissances et des tensions d'alimentation continues qui peuvent être différentes. Ainsi, un adaptateur courant porteur intégré prévu pour un appareil spécifique peut ne pas être adapté en puissance et/ou en tension pour être utilisé avec un autre appareil.

La solution retenue actuellement est, d'une part, de restreindre l'utilisation des adaptateurs courant porteur à un parc d'appareils compatibles en tension et, d'autre part, d'aligner la puissance fournie par l'adaptateur intégré à la plus grande puissance nécessaire de ce parc. En d'autres termes, les solutions actuelles adressent un parc restreint avec un surdimensionnement de la puissance fournie.

Le document EP2051437 décrit un adaptateur courant porteur.

Le problème résolu par la présente invention est d'optimiser la consommation d'un adaptateur courant porteur intégré et d'adresser un parc d'appareils hétérogènes en puissances et en tensions.

A cet effet, selon un premier aspect de la présente invention, la présente invention concerne un adaptateur courant porteur intégré comprenant un bloc fonctionnel principal alimenté en tension continue par un premier convertisseur de tension interne ; un moyen pour couper l'alimentation en tension continue du bloc fonctionnel principal lorsque l'adaptateur fonctionne en mode veille ; et un bloc de contrôle alimenté en tension continue déterminant un état d'ouverture et de fermeture du moyen pour couper l'alimentation en tension continue du bloc fonctionnel principal ; et un câble de sortie comportant un câble réseau pour transporter des flux numériques haut débit et un câble électrique pour alimenter un appareil branché en sortie de l'adaptateur en tension continue. L'adaptateur comporte également un filtre F, pour filtrer des signaux haute fréquence, reliant une prise secteur à une entrée d'un second convertisseur de tension destiné à délivrer une alimentation en tension continue d'une part au bloc de contrôle via un adaptateur de tension et d'autre part à l'appareil par l'intermédiaire du câble électrique, l'alimentation en tension continue du bloc fonctionnel principal et celle du bloc de contrôle et de l'appareil étant indépendantes l'une de l'autre, le moyen pour couper l'alimentation en tension continue du bloc fonctionnel principal étant situé en amont du premier convertisseur de tension interne au niveau de son entrée et relié à la prise secteur de sorte à ne pas couper l'alimentation en tension continue du bloc de contrôle ; et, une borne d'entrée et une prise d'accueil, ladite prise d'accueil et la borne d'entrée étant prévues pour brancher le second convertisseur de tension, le second convertisseur de tension étant un convertisseur de tension externe.

En effet, dans les adaptateurs courant porteur intégrés actuels, les liaisons entre la sortie du convertisseur de tension interne et le bloc principal restent alimentées en tension continue lorsque l'adaptateur courant porteur fonctionne en mode veille, ce qui provoque une consommation inutile, notamment au niveau des adaptateurs de tension utilisés pour obtenir les différentes tensions continues dérivées qui alimentent le bloc principal.

De plus le fait que le moyen pour couper l'alimentation en tension continue du bloc fonctionnel principal soit situé en amont du premier convertisseur de tension interne est particulièrement avantageux car il permet une consommation minimale de l'adaptateur courant porteur lorsqu'il fonctionne en mode veille.

Selon un mode de réalisation, ledit adaptateur comporte un moyen pour détecter si une tension continue (V_IN) est présente sur la borne d'entrée (DC_IN), et des moyens (13, 14) pour que le bloc de contrôle (PLTS) soit alimenté soit par le premier convertisseur de tension interne (AC/DC) lorsque aucune tension continue (V-IN) n'est présente sur la borne d'entrée (DC_IN), soit par le second convertisseur de tension(AC/DC_D) lorsque une tension continue (V_IN) est présente sur la borne d'entrée (DC_IN).

Selon un autre mode de réalisation, chaque moyen (I3, I4) pour que le bloc de contrôle (PLTS) soit alimenté soit par le premier convertisseur de tension interne (AC/DC) soit par le second convertisseur de tension (AC/DC_D) est piloté par le bloc de contrôle (PLTS) de l'adaptateur courant porteur.

Selon un autre mode de réalisation, l'adaptateur de tension continue est prévu pour fournir une tension continue constante pour alimenter le bloc de contrôle de l'adaptateur courant porteur lorsqu'une tension continue appartenant à une plage prédéterminée de tension est présente sur son entrée. Selon un deuxième aspect de la présente invention, la présente invention concerne un système de distribution de flux numériques sur un réseau électrique, comportant au moins un adaptateur de type courant porteur conforme au premier aspect.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente schématiquement une vue d'ensemble d'un mode de réalisation d'un adaptateur courant porteur intégré selon la présente invention lorsqu'il est branché sur une prise d'un réseau électrique,
La Fig. 2 représente schématiquement la structure interne d'un adaptateur courant porteur intégré selon l'état de la technique,
La Fig. 3 représente schématiquement un premier mode de réalisation de la structure interne d'un adaptateur courant porteur intégré,
La Fig. 4 représente schématiquement un deuxième mode de réalisation de la structure interne d'un adaptateur courant porteur intégré,
La Fig. 5 représente schématiquement un troisième mode de réalisation de la structure interne d'un adaptateur courant porteur intégré selon la présente invention, et
La Fig. 6 représente schématiquement un quatrième mode de réalisation de la structure interne d'un adaptateur courant porteur intégré selon la présente invention.
Les références des éléments des Figs. qui sont identiques désignent les mêmes éléments.

Selon la présente invention, un adaptateur courant porteur intégré A se présente comme un boîtier qui comporte une prise secteur AC_IN.

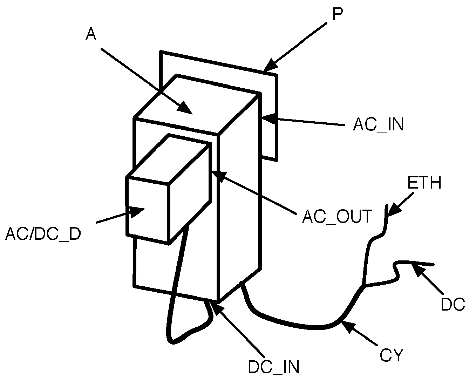

L'adaptateur A est représenté à la Fig. 1 lorsqu'il est branché sur une prise électrique P d'un réseau électrique SE au niveau de sa prise secteur AC_IN.

L'adaptateur A est connecté au réseau électrique SE d'une part, pour assurer sa fonction de modem vers le réseau courant porteur, et, d'autre part, pour dériver les tensions continues nécessaires à son fonctionnement et à l'alimentation d'un appareil D (non représenté).

L'adaptateur A comporte également un câble de sortie CY. Ce câble comporte un câble ETH par exemple de type Ethernet ou prévu pour transporter des flux numériques haut débit et un câble électrique DC prévu pour alimenter l'appareil D en tension continue. Ainsi, le câble Ethernet est relié à l'appareil D pour la transmission de flux numériques entre l'adaptateur A et cet appareil D et le câble DC est relié à l'appareil D pour l'alimenter en énergie.

Selon une caractéristique de l'invention, l'adaptateur A comporte une prise d'accueil AC_OUT et une borne d'entrée DC_IN. Selon l'exemple représenté, la prise d'accueil AC_OUT est située sur une face de l'adaptateur A opposée à la face qui porte la prise secteur AC_IN et la borne d'entrée DC_IN est située sous l'adaptateur A. D'autres réalisations sont envisageables.

Selon l'exemple représenté à la Fig. 1, un convertisseur de tension externe AC/DC_D est branché entre la prise d'accueil AC_OUT et la borne d'entrée DC_IN. Dans ce cas, une tension continue V_IN issue du convertisseur AC/DC_D est présente sur cette borne d'entrée. Ce convertisseur de tension AC/DC_D est par exemple celui vendu avec un appareil D qui est alors connecté au câble de sortie CY. Cependant, la prise d'accueil AC_OUT peut servir à la connexion d'une nourrice ou de n'importe quel autre équipement électrique.

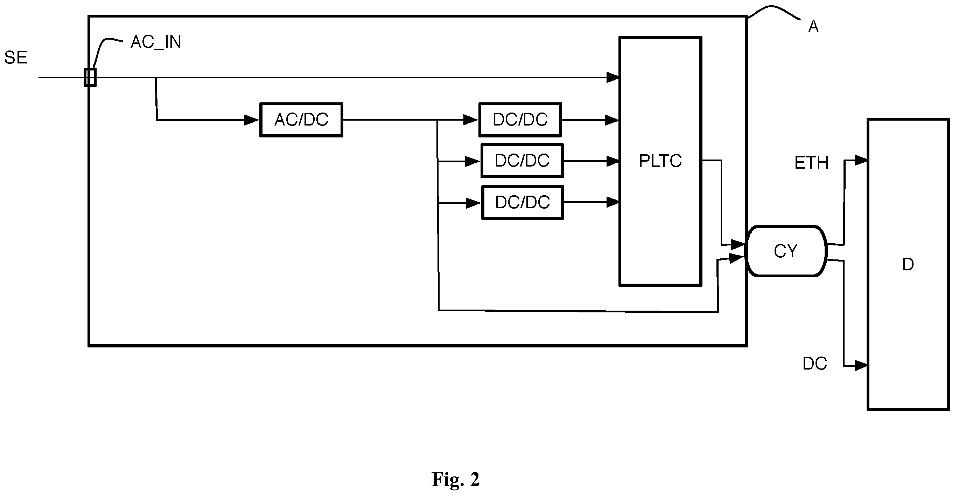

La Fig. 2 représente schématiquement la structure interne d'un adaptateur courant porteur intégré A selon l'état de la technique.

L'adaptateur A est constitué d'un ensemble de composants électroniques qui peuvent être regroupés en un bloc fonctionnel principal PLTC qui est relié à la prise secteur AC_IN pour être alimenté par la tension secteur.

L'adaptateur A comporte également un convertisseur de tension interne AC/DC dont la fonction est de convertir la tension secteur en une tension continue.

L'adaptateur A comporte également un ou plusieurs adaptateurs de tension continue DC/DC dont les rôles sont de fournir des tensions continues dérivées qui sont requises pour le fonctionnement du bloc principal PLTC. Selon l'exemple représenté à la Fig. 2, le bloc principal PLTC requiert trois tensions continues dérivées de la tension continue issue du convertisseur de tension AC/DC. Trois adaptateurs de tension continue DC/DC sont donc requis selon cet exemple. On peut noter que l'appareil D est alimenté par la tension continue issue du convertisseur de tension AC/DC.

Selon une caractéristique de la présente invention, l'adaptateur A comporte au moins un moyen pour couper l'alimentation en tension continue du bloc principal PLTC lorsque l'adaptateur fonctionne en mode veille.

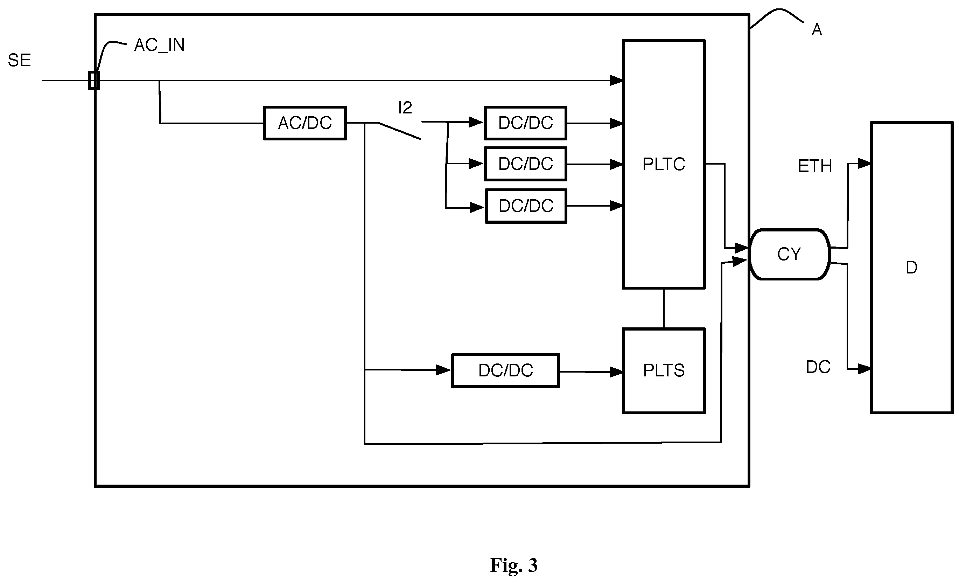

La Fig. 3 représente schématiquement un premier mode de réalisation de la structure interne d'un adaptateur courant porteur intégré.

Selon ce mode de réalisation, le moyen pour couper l'alimentation en tension continue du bloc principal PLTC est situé en aval du convertisseur de tension AC/DC au niveau de sa sortie. Ce moyen, référencé I2, est de préférence un interrupteur dont l'état d'ouverture et de fermeture est déterminé par un bloc de contrôle fonctionnel PLTS.

Le bloc de contrôle PLTS a pour fonction de mettre en veille ou de réveiller le bloc principal PLTC. Dans une approche élaborée, cette fonction peut être réalisée d'après la surveillance de l'activité réseau de l'adaptateur. Ainsi, lorsque aucune activité n'est détectée, le bloc de contrôle PLTS indique au bloc principal PLTC de désactiver ses interfaces, ce qui permet de diminuer la consommation de l'adaptateur courant porteur A qui passe alors en mode de veille. Dès qu'une activité est détectée, le bloc de contrôle de veille PLTS indique au bloc principal PLTC de réactiver ses interfaces et l'adaptateur A bascule alors dans un mode actif. Dans une approche plus triviale, le bloc PLTC pourrait être mis en veille ou réveillé par le bloc PLTS d'après une information binaire délivrée par exemple par l'action d'un bouton (appuyé ou relâché) dont il aurait la gestion.

Le bloc de contrôle PLTS requiert d'être alimenté par une tension continue dérivée de la tension issue du convertisseur de tension AC/DC. Selon l'exemple présenté, le bloc de contrôle PLTS est alimenté par une tension continue dérivée c'est-à-dire issue d'un adaptateur de tension DC/DC.

L'interrupteur I2 est fermé lorsque l'adaptateur A fonctionne en mode actif et est ouvert lorsqu'il fonctionne en mode veille, coupant ainsi l'alimentation des liaisons entre la sortie du convertisseur de tension interne AC/DC et le bloc principal PLTC. La consommation de l'adaptateur A fonctionnant alors en mode veille est ainsi optimisée.

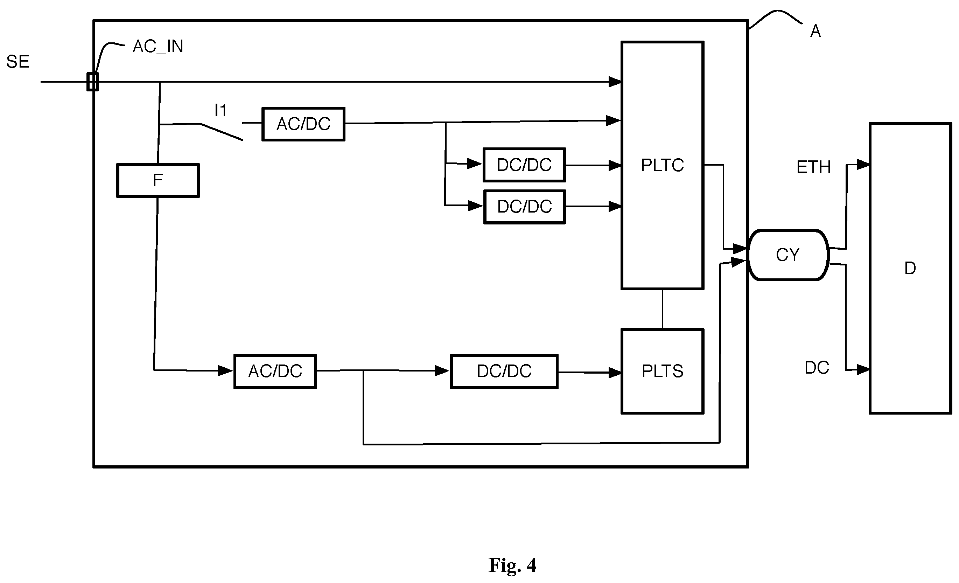

La Fig. 4 représente schématiquement un deuxième mode de réalisation de la structure interne d'un adaptateur courant porteur intégré.

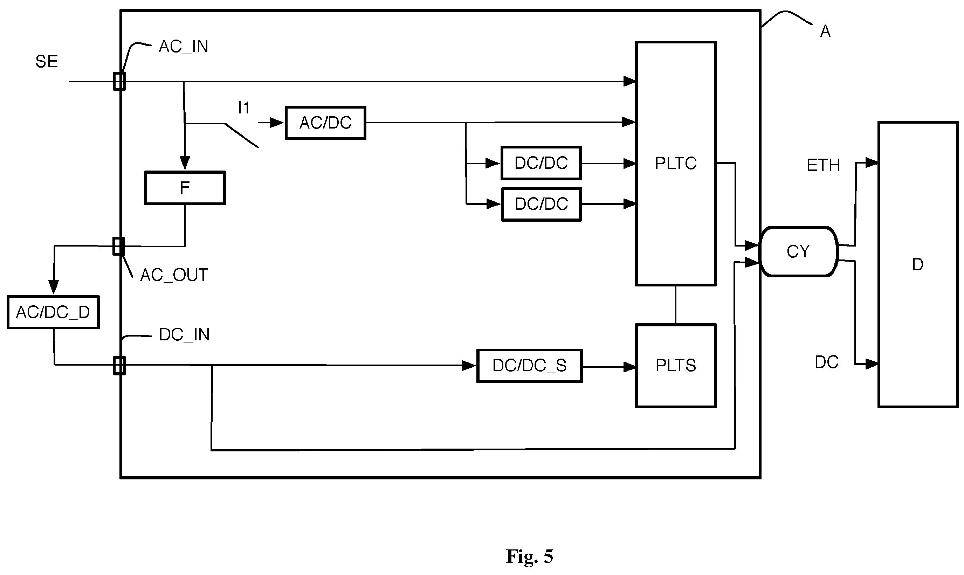

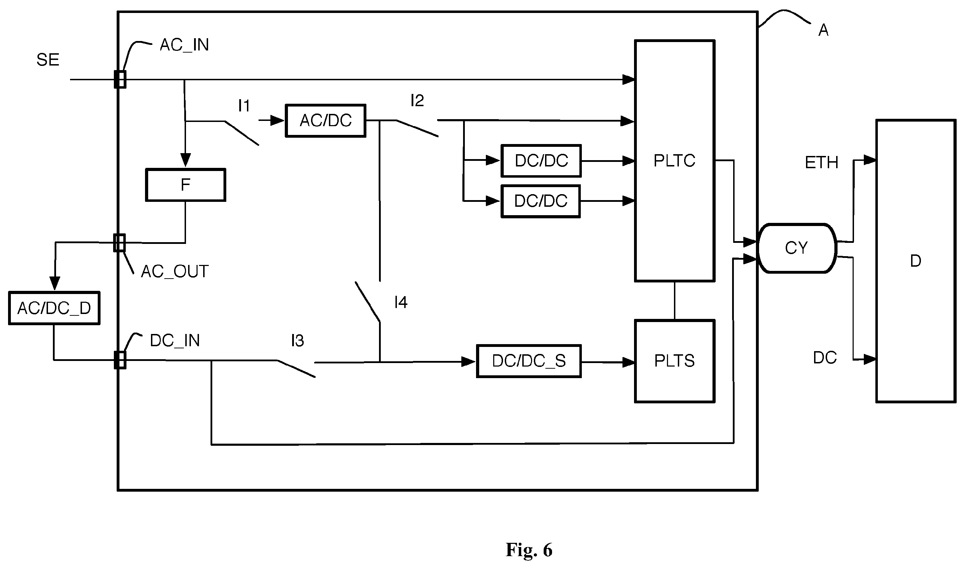

On peut noter, que selon ce mode de réalisation, le bloc principal PLTC requiert, en plus des tensions continues dérivées, une tension issue directement du convertisseur de tension AC/DC. Ceci ne limite en rien ce mode de réalisation car le bloc principal PLTC peut, par exemple, ne requérir que des tensions continues dérivées. Il en est de même des modes de réalisation présenté aux Figs. 5 et 6.

Selon ce mode de réalisation, l'adaptateur A comporte deux convertisseurs AC/DC, un filtre F et un moyen I1 pour couper l'alimentation en tension continue du bloc principal.

Le moyen I1 est situé en amont d'un convertisseur de tension AC/DC au niveau de son entrée. Ce convertisseur de tension AC/DC est prévu pour délivrer une tension continue dont sont dérivées les tensions continues qui alimentent le bloc principal PLTC.

Le filtre F relie la prise secteur AC_IN et l'entrée de l'autre convertisseur AC/DC. La fonction du bloc F est de filtrer les signaux hautes fréquences permettant ainsi de meilleures performances des transmissions PLT. Cet autre convertisseur de tension AC/DC est prévu pour délivrer une tension continue qui alimente le bloc de contrôle PLTS via un adaptateur de tension DC/DC.

L'alimentation en tension continue du bloc principal et celle du bloc de contrôle sont donc indépendantes l'une de l'autre.

Le moyen I1 est de préférence un interrupteur dont l'état d'ouverture et de fermeture est déterminé par le bloc de contrôle PLTS. L'interrupteur I1 est fermé lorsque l'adaptateur A fonctionne en mode actif et est ouvert lorsqu'il fonctionne en mode veille, coupant ainsi l'alimentation en tension secteur d'un convertisseur AC/DC, ce qui a pour conséquence de couper l'alimentation en tensions continues du bloc principal PLTS. La consommation de l'adaptateur A en mode veille est ainsi fortement réduite car la consommation de l'adaptateur A se résume à celle d'un seul convertisseur de tension AC/DC (au lieu de deux) et du bloc de contrôle PLTS.

La Fig. 5 représente schématiquement un troisième mode de réalisation de la structure interne d'un adaptateur courant porteur intégré selon la présente invention.

Ce mode de réalisation est relatif à un adaptateur A qui comporte une prise d'accueil AC_OUT et une borne d'entrée DC_IN et qui est prévu pour qu'un convertisseur de tension externe AC/DC_D soit branché entre cette prise d'accueil AC_OUT et cette borne d'entrée DC_IN.

Selon ce mode de réalisation, le moyen pour couper l'alimentation en tension continue du bloc principal est situé en amont du convertisseur de tension AC/DC au niveau de son entrée.

L'adaptateur A comporte également un filtre F reliant la prise secteur AC_IN et la prise d'accueil AC_OUT. La fonction du bloc F est de filtrer les signaux hautes fréquences permettant ainsi de meilleures performances des transmissions PLT.

La tension secteur, alors redistribuée au travers du filtre F sur la prise d'accueil AC_OUT, est alors convertie en une tension continue V_IN qui est alors présente sur la borne d'entrée DC_IN.

L'alimentation en tension continue du bloc principal PLTC se fait au travers du convertisseur de tension AC/DC interne et l'alimentation en tension continue du bloc de contrôle PLTS se fait au travers du convertisseur externe AC/DC_D.

L'alimentation en tension continue du bloc principal et celle du bloc de contrôle sont donc indépendantes l'une de l'autre.

Le moyen I1 est fermé lorsque l'adaptateur A fonctionne en mode actif et est ouvert lorsqu'il fonctionne en mode veille, coupant ainsi l'alimentation en tension secteur du convertisseur AC/DC, ce qui a pour conséquence de couper l'alimentation en tensions continues du bloc principal PLTC. On se trouve ainsi avec une réduction de consommation qui est optimale de l'adaptateur A en mode veille car la consommation de l'adaptateur A se résume uniquement à celle du bloc de contrôle PLTS. Le convertisseur AC/DC, habituellement utilisé par les adaptateurs courant porteur intégré actuels, n'étant plus utilisé selon la présente invention, seul le convertisseur AC/DC_D externe fonctionne et continue d'alimenter l'appareil D et le bloc de contrôle PLTS. Ce convertisseur étant prévu pour avoir un rendement correct même lorsqu'il ne fonctionne pas à pleine charge, le bilan énergétique de l'utilisation d'un adaptateur A selon ce deuxième mode de réalisation est nettement meilleur que ceux obtenus par les adaptateurs courant porteur des Fig. 2, 3 et 4.

La Fig. 6 représente schématiquement un troisième mode de réalisation de la structure interne d'un adaptateur courant porteur intégré selon la présente invention.

Ce mode de réalisation est particulièrement avantageux car il permet une plus grande souplesse d'utilisation de l'adaptateur courant porteur. En effet, selon ce mode de réalisation, l'adaptateur A peut-être utilisé soit sans convertisseur de tension externe AC/DC_D soit avec. Le passage d'une utilisation à l'autre est détecté automatiquement par l'adaptateur A.

Pour cela, l'adaptateur A comporte un moyen pour détecter si une tension continue V_IN est présente sur la borne d'entrée DC_IN.

Il comporte également les moyens I1 et I2 décrits précédemment ainsi que deux interrupteurs I3 et I4 dont les états d'ouverture et de fermeture sont déterminés pour que le bloc de contrôle PLTS soit alimenté soit par le convertisseur de tension interne AC/DC lorsque aucun convertisseur de tension externe AC/DC_D n'est branché entre la prise d'accueil AC_OUT et la borne d'entrée DC_IN, soit par ce convertisseur de tension externe lorsque celui-ci est branché. L'interrupteur I3 relie la borne d'entrée DC_IN à l'entrée du convertisseur DC/DC_S et l'interrupteur I4 relie la sortie du convertisseur AC/DC à l'entrée du convertisseur DC/DC_S.

Si une tension V_IN est détectée sur la borne DC_IN, c'est-à-dire par exemple si un convertisseur AC/DC_D est branché entre la prise d'accueil AC_OUT et la borne d'entrée DC_IN, les interrupteurs I1, I2, et I3 sont fermés et l'interrupteur I4 est ouvert lorsque l'adaptateur A fonctionne en mode actif.

Lorsque le bloc de contrôle détecte une inactivité réseau ou un appui sur un bouton de mise en veille et qu'il décide que l'adaptateur A doit fonctionner en mode veille, le bloc de contrôle ouvre l'interrupteur I1 provoquant ainsi une réduction de consommation optimale de l'adaptateur A tel qu'expliqué en relation avec la Fig. 5.

Si aucune tension V_IN n'est présente sur la borne DC_IN, les interrupteurs I1, I2, et I4 sont fermés et l'interrupteur I3 est ouvert lorsque l'adaptateur A fonctionne en mode actif. L'alimentation en tension continue du bloc principal PLTC se fait alors au travers du convertisseur AC/DC interne et l'alimentation en tension continue du bloc de contrôle PLTS se fait au travers du convertisseur DC/DC_S alors alimenté par la tension continue délivré par le convertisseur AC/DC interne.

Lorsque le contrôleur détecte une inactivité réseau ou un appui sur un bouton de mise en veille et décide que l'adaptateur doit fonctionner en mode veille, le bloc de contrôle ouvre l'interrupteur I2 coupant ainsi l'alimentation des liaisons entre la sortie du convertisseur de tension interne AC/DC et le bloc principal PLTC. On se trouve ainsi avec une réduction de consommation de l'adaptateur en mode veille. Toutefois, une telle utilisation de l'adaptateur reste moins favorable énergétiquement parlant par rapport à une utilisation qui utilise un convertisseur AC/DC_D externe car le convertisseur AC/DC interne fonctionne à un faible rendement lorsque l'adaptateur est en mode veille. Néanmoins, ce mode d'utilisation reste intéressant car il assure à l'adaptateur courant porteur intégré un fonctionnement autonome et une réduction de sa consommation par rapport aux adaptateurs courant porteur intégrés actuels.

Ainsi, les deux moyens I1 et I2 permettent une optimisation de la consommation en mode veille de l'adaptateur A en coupant l'alimentation en tension continue du bloc principal dès que l'adaptateur bascule dans le mode veille.

Selon une variante du troisième ou quatrième mode de réalisation, l'adaptateur de tension continue qui est utilisé pour alimenter le bloc de contrôle PLTS, qui est référencé DC/DC_S sur les Figs. 5 et 6, est prévu pour fournir une tension continue pour alimenter le bloc de contrôle PLTS lorsque la tension continue V_IN appartient à une plage prédéterminée de tension PV. Cet adaptateur de tension permet ainsi à l'adaptateur courant porteur de répondre au problème d'hétérogénéité en tension des appareils. En effet, comme on le voit sur la Fig. 5 et 6, la borne d'entrée DC_IN est directement reliée au câble DC du câble de sortie. Cette liaison directe permet d'alimenter l'appareil D en tension continue. Comme les appareils susceptibles d'être associés avec l'adaptateur A peuvent requérir des tensions de valeurs différentes (fournies alors par le convertisseur de tension AC/DC_D), la tension V_IN, présente sur la borne d'entrée DC_IN peut varier. En définissant un adaptateur de tension DC/DC_S qui permet de fournir une tension continue constante lorsque la tension V_IN appartient à une plage PV prédéterminée de manière à couvrir l'ensemble des appareils actuels, l'adaptateur A peut-être associé à n'importe lequel de ces appareils.

Selon son aspect matériel, en fonction des tensions mises en jeu dans l'adaptateur A, les moyens mis en oeuvre pour réaliser les interrupteurs I3 et I4 ainsi que leurs commandes peuvent être très simples, par exemple des diodes, ou plus complexes tels que par exemple des transistors de type mosfets. Quoi qu'il en soit, la mise en oeuvre de la présente invention est peu coûteuse.

Le bloc de contrôle PLTS comporte, en outre, un micro-contrôleur qui embarque un logiciel prévu pour commander les interrupteurs comme indiqué précédemment.

Le moyen I1 peut être un opto-triac assurant à la fois la coupure et l'isolation du secondaire par rapport à la zone TRT (e.g. conformité à la norme de sécurité EN60950). Quand au moyen I2 un simple transistor mosfet peut être utilisé.

L'état de l'adaptateur A est une variable du logiciel embarqué dans le microcontrôleur. Cette variable peut évoluer selon l'activité réseau transitant sur le bloc PLTC issu de l'écoute de niveau 1 (e.g. détecteur NLP/FLP/OFDM) et de niveau 2 (signaux binaires issus d'un bus MII ou des processeurs Ethernet et PLT). Plus trivialement, l'état de l'adaptateur pourrait également être une commande externe explicite telle que l'appui d'un bouton.

## Revendications

1. Adaptateur courant porteur intégré comprenant un bloc fonctionnel principal (PLTC) alimenté en tension continue par un premier convertisseur de tension interne (AC/DC) ;
- un interrupteur (I1) pour couper l'alimentation en tension continue du bloc fonctionnel principal (PLTC) lorsque l'adaptateur fonctionne en mode veille ; et
- un bloc de contrôle (PLTS) alimenté en tension continue déterminant un état d'ouverture et de fermeture de l'interrupteur (I1) pour couper l'alimentation en tension continue du bloc fonctionnel principal (PLTC) ; et
- un câble de sortie (CY) comportant un câble réseau pour transporter des flux numériques haut débit et un câble électrique (DC) pour alimenter un appareil (D) branché en sortie de l'adaptateur en tension continue ;
**caractérisé en ce que** :
l'adaptateur comporte également un filtre F, pour filtrer des signaux haute fréquence, reliant une prise secteur (AC_IN) à une entrée prévue pour connecter un second convertisseur de tension (AC/DC_D) destiné à délivrer une alimentation en tension continue d'une part au bloc de contrôle (PLTS) via un adaptateur de tension continue (DC/DC_S) et d'autre part à l'appareil (D) par l'intermédiaire du câble électrique (DC), l'alimentation en tension continue du bloc fonctionnel principal (PLTC) et celle du bloc de contrôle (PLTS) et de l'appareil (D) étant indépendantes l'une de l'autre ; , le moyen (I1) pour couper l'alimentation en tension continue du bloc fonctionnel principal (PLTC) étant situé en amont du premier convertisseur de tension interne (AC/DC) au niveau de son entrée et relié à la prise secteur (AC_IN) de sorte à ne pas couper l'alimentation en tension continue du bloc de contrôle (PLTS) ; et,
une borne d'entrée (DC-IN) et une prise d'accueil (AC_OUT), ladite prise d'accueil (AC_OUT) et la borne d'entrée (DC-IN) étant prévues pour brancher le second convertisseur de tension (AC/DC_D), le second convertisseur de tension étant un convertisseur de tension externe.

2. Adaptateur courant porteur selon la revendication 1, **caractérisé en ce qu'**il comporte un moyen pour détecter si une tension continue (V_IN) est présente sur la borne d'entrée (DC_IN) , et des moyens (I3, I4) pour que le bloc de contrôle (PLTS) soit alimenté soit par le premier convertisseur de tension interne (AC/DC) lorsque aucune tension continue (V_IN) n'est présente sur la borne d'entrée (DC_IN), soit par le second convertisseur de tension externe (AC/DC_D) lorsque une tension continue (V_IN) est présente sur la borne d'entrée (DC_IN).

3. Adaptateur courant porteur selon la revendication 2, dans lequel chaque moyen (I3, I4)
pour que le bloc de contrôle (PLTS) soit alimenté soit par le premier convertisseur de tension interne (AC/DC) soit par le second convertisseur de tension externe (AC/DC_D) est
piloté par le bloc de contrôle (PLTS) de l'adaptateur courant porteur.

4. Adaptateur de type courant porteur selon l'une des revendications 1 à 3, **caractérisé en ce que** l'adaptateur de tension continue (DC/DC/_S) est prévu pour fournir une tension continue constante pour alimenter le bloc de contrôle (PLTS) de l'adaptateur courant porteur lorsqu'une tension continue appartenant à une plage prédéterminée de tension (PV) est présente sur son entrée.

5. Système de distribution de flux numériques sur un réseau électrique, **caractérisé en ce qu'**il comporte au moins un adaptateur de type courant porteur conforme à l'une des revendications 1 à 4.

## Patentansprüche

1. Integrierter Trägerstromadapter umfassend einen Hauptfunktionsblock (PLTC), der von einen ersten internen Spannungswandler (AC/DC) mit Gleichspannung versorgt wird,
- einen Schalter (I1), um die Gleichspannungsversorgung des Hauptfunktionsblocks (PLTC) zu unterbrechen, wenn der Adapter im Standby-Modus arbeitet, und
- einen gleichspannungsversorgten Kontrollblock (PLTS), der einen Öffnungsund einen Schließzustand des Schalters (I1) bestimmt, um die Gleichspannungsversorgung des Hauptfunktionsblocks (PLTC) zu unterbrechen, und
- ein Ausgangskabel (CY), das ein Netzwerkkabel umfasst, um digitale Informationsflüsse mit hohem Datendurchsatz zu transportieren, sowie ein Stromkabel (DC), um ein, an den Adapterausgang angeschlossenes Gerät (D) mit Gleichspannung zu versorgen,
**dadurch gekennzeichnet, dass**:
der Adapter zudem einen Filter F zum Filtern eines Hochfrequenzsignals beinhaltet, der eine Netzsteckdose (AC_IN) mit einem für den Anschluss eines zweiten Spannungswandlers (AC/DC_D) vorgesehenen Eingang verbindet, wobei der zweite Spannungswandler dazu vorgesehen ist, eine Gleichspannungsversorgung einerseits über einen Gleichspannungsadapter (DC/DC_S) an den Kontrollblock (PLTS) und andererseits über ein elektrisches Kabel (DC) an das Gerät (D) abzugeben, wobei die Gleichspannungsversorgung des Hauptfunktionsblocks (PLTC) und diejenige des Kontrollblocks (PLTS) und des Geräts (D) voneinander unabhängig sind, das Mittel (I1) zur Unterbrechung der Gleichspannungsversorgung des Hauptfunktionsblocks (PLTC) stromaufwärts des ersten internen Spannungswandlers (AC/DC), an dessen Eingang angeordnet und mit der Netzsteckdose (AC_IN) verbunden ist, so dass die Gleichspannungsversorgung des Kontrollblocks (PLTS) nicht unterbrochen wird, und
eine Eingangsklemme (DC-IN) und einen Dockanschluss (AC_OUT), wobei der Dockanschluss (AC_OUT) und die Eingangsklemme (DC-IN) dazu vorgesehen sind, den zweiten Spannungswandler (AC/DC_D) anzuschließen, und der zweite Spannungswandler ein externer Spannungswandler ist.

2. Trägerstromadapter nach Patentanspruch 1, **dadurch gekennzeichnet, dass** er ein Mittel zum Erfassen, ob eine Gleichspannung (V_IN) an der Eingangsklemme (DC_IN) anliegt, beinhaltet, sowie Mittel (13, 14) zur Versorgung des Kontrollblocks (PLTS) entweder über den ersten internen Spannungswandler (AC/DC), wenn keine Gleichspannung (V_IN) an der Eingangsklemme (DC_IN) anliegt, oder über den zweiten externen Spannungswandler (AC/DC_D, wenn eine Gleichspannung (V_IN) an der Eingangsklemme (DC_IN) anliegt.

3. Trägerstromadapter nach Patentanspruch 2, wobei jedes Mittel (I3, I4) zur Versorgung des Kontrollblocks (PLTS) entweder über den ersten internen Spannungswandler (AC/DC) oder über den zweiten externen Spannungswandler (AC/DC_D) durch den Kontrollblock (PLTS) des Trägerstromadapters gesteuert wird.

4. Trägerstromadapter nach einem der Patentansprüche 1 bis 3, **dadurch gekennzeichnet, dass** der Gleichspannungsadapter (DC/DC/_S) dazu vorgesehen ist, eine konstante Gleichspannung abzugeben, um den Kontrollblock (PLTS) des Trägerstromadapters zu versorgen, wenn eine, einem vorbestimmten Spannungsbereich (PV) zugehörige Gleichspannung an seinem Eingang anliegt.

5. System zur Verteilung von digitalen Informationsflüssen in einem Stromnetz, **dadurch gekennzeichnet, dass** es wenigstens einen Adapter vom Typ Trägerstromadapter gemäß einem der Patentansprüche 1 bis 4 umfasst.

## Claims

1. Integrated carrier-current adapter comprising a principal functional block (PLTC) supplied with direct current by a first internal voltage converter (AC/DC),
- a switch (I1), to cut off the direct current supply to the principal functional block (PLTC) when the adapter is operating in standby mode; and
- a control block (PLTS), supplied with direct current, to control the open or closed state of the switch (I1) in order to cut off the direct current supply to the principal functional block (PLTC); and
- an output cable (CY) comprising a network cable to carry high-speed digital information flows, together with a current cable (DC) to supply direct current to a device (D) connected to the output of the adapter,
**characterized in that**:
the adapter further comprises a filter F to filter high-frequency signals, linking a mains socket (AC_IN) to an input provided for the purpose of connecting a second voltage converter (AC/DC_D) designed to supply direct current, on the one hand to the control block (PLTS) via a direct-current adapter (DC/DC_S) and on the other hand via an electric cable (DC) to the device (D), the direct current supply to the principal functional block (PLTC) and that to the control block (PLTS) and the device (D) being independent of each other, the means (11) of cutting off the direct current supply to the principal functional block (PLTC) being arranged upstream from the first internal voltage converter (AC/DC) at its input and connected to the mains socket (AC_IN), so that the direct current supply to the control block (PLTS) is not interrupted; and
an input terminal (DC-IN) and a dock connection (AC_OUT), such dock connection (AC_OUT) and input terminal (DC-IN) being provided for the purpose of connecting the second voltage converter (AC/DC_D), the second voltage converter being an external voltage converter.

2. Carrier-current adapter according to Claim 1, **characterized in that** it comprises a means of detecting whether a direct current (\/_IN) is present at the input terminal (DC_IN) and also means (13, 14) for the control block (PLTS) to be supplied either by the first internal voltage converter (AC/DC), if no direct current (V_IN) is present at the input terminal (DC_IN), or by the second external voltage converter (AC/DC_D, if a direct current voltage is present at the input terminal (DC_IN).

3. Carrier-current adapter according to Claim 2, such that each means (I3, I4) for the control block (PLTS) to be supplied either by the first internal voltage converter (AC/DC) or by the second external voltage converter (AC/DC_D) is controlled by the control block (PLTS) of the carrier-current adapter.

4. Carrier-current adapter according to one of Claims 1 to 3, **characterized in that** the direct current adapter (DC/DC/_S) is designed to provide a constant direct current to supply the control block (PLTS) of the carrier-current adapter, when a direct current lying within a predetermined voltage range (PV) is present at its input.

5. System for the distribution of digital information flows in an electricity grid, **characterized in that** it comprises at least one adapter of the type carrier-current adapter in conformity with one of Claims 1 to 4.
